# EUROPEAN PATENT SPECIFICATION

(11) **EP 2 234 724 B1**
(45) Date of publication and mention of the grant of the patent: **11.05.2011**
(21) Application number: 08857721.8
(22) Date of filing: 05.12.2008
(51) Int. Cl.: B01L 3/00, C12Q 1/68, G01N 27/447, G01N 33/50

(54) **APPARATUS AND METHOD FOR DETECTING DNA DAMAGE**
VORRICHTUNG UND VERFAHREN ZUR ERKENNUNG VON DNA-BESCHÄDIGUNG
APPAREIL ET PROCÉDÉ POUR DÉTECTER UNE DÉTÉRIORATION D'ADN

(30) Priority: 05.12.2007 GB 0723725
(43) Date of publication of application: 06.10.2010
(73) Proprietor: GE Healthcare UK Limited, Little Chalfont Buckinghamshire HP7 9NA (GB)
(72) Inventor: THOMAS, Nicholas, Cardiff, South Glamorgan CF14 7YT (GB); KENRICK, Michael, Cardiff, South Glamorgan CF14 7YT (GB); STUBBS, Simon, Cardiff, South Glamorgan CF14 7YT (GB)
(74) Representative: Bryan, Ian Bennett
(86) International application number: PCT/EP2008/066895
(87) International publication number: WO 2009/071665

(56) References cited:
- WO-A-2005/098423
- WO-A-2007/103116
- DE-A1-102004 046 364
- JP-A- 2007 024 612
- US-A1- 2005 000 811
- US-A1- 2006 105 449
- MUNCE N R ET AL: "MICROFABRICATED SYSTEM FOR PARALLEL SINGLE-CELL CAPILLARY ELECTROPHORESIS" ANALYTICAL CHEMISTRY, AMERICAN CHEMICAL SOCIETY. COLUMBUS, US, vol. 76, no. 17, 1 September 2004 (2004-09-01), pages 4983-4989, XP001209648 ISSN: 0003-2700

## Description

### Technical Field

The present invention relates to an apparatus and an *in-situ* method for conducting Comet assays.

### Background to the invention

Damage to the integrity of a cell's DNA may occur through a variety of mechanisms. DNA breakage may be caused through chemical reaction as a result of ingestion or absorption of a drug or other chemical agent which reacts with DNA ( Exon, J.H., J.Toxicol.Environ.Health B Crit.Rev., (2006), 9(5), 397-412). Alternatively DNA damage may be induced by via physical means, such as exposure to ionising radiation (Brendler-Schwaab,S. et.al. Mutat.Res., (2004), 566(1), 65-91), either alone, or in combination with a chemical agent by a photochemical mechanism. Any such DNA damage has the potential to lead to an inheritable defect in the genetic information carried by a cell and hence to potentiate the development of cancer.

Regulatory guidelines require that all registered drugs undergo assessment for DNA damage in a panel of assays. These assays include measurement of gene mutation in bacteria and determination of DNA damage in mammalian cells *in-vitro* and *in-vivo.* The assays are typically extremely time consuming and expensive to perform (~$50,000 /compound), and thus tend to be restricted to the end of the drug discovery process. Estimates of the cost of failure or inability to accurately predict toxicity early in drug development have been put as high as $8 billion/year, around 30% of all drug failure costs (Cambridge Healthtech Advances Life Sciences Report Dec 2004: Toxicogenomics and Predictive Toxicology: Market and Business Outlook). In addition to testing of new drugs, there is increasing regulatory activity to extend testing to other chemicals and materials, such as food dyes and cosmetics that are intended for human consumption or use, or which may be indirectly or accidentally consumed or ingested (OECD guideline for the testing of chemicals, draft proposal for a new guideline 487, June 2004).

In addition to testing newly developed drugs and other chemicals for induction of DNA damage there is increasing evidence that environmental factors may contribute to DNA damage, including diet (Young, G.P., Forum Nutr., (2007), 60, 91-6), pollution (Moller, P., Basic Clin.Pharmacol.Toxicol., (2006), 98(4), 336-45), and occupational exposure to mutagens (Faust, F. et.al., Toxicology, (2004), 98(1-3), 341-50). The potential for a wide range of chemical, physical and physiochemical mechanisms to induce DNA damage requires that methods are available for screening and monitoring of individuals at risk (Lee, E. et.al., Toxicol. Sci., (2004), 81 (1), 121-32) by analysis of DNA damage in blood, cell or tissue samples taken from such individuals.

The Comet assay is a single cell electrophoresis assay for detection of DNA damage in mammalian cells (Ostling, O., Johanson, K.J., Biochem.Biophys.Res.Commun., (1984), 123(1), 291-8). Exposure of cells to compounds inducing DNA damage may produce single or double strand breaks in genomic DNA as well as chemical modifications. In the Comet assay treated cells are embedded in agarose, lysed, and treated with alkali to denature DNA. Subsequent electrophoresis leads to migration of fragmented DNA and/or relaxation of chromatin away from the nucleus, thereby producing the appearance of a Comet (from which the assay is named) which is imaged by fluorescence microscopy. The amount of DNA liberated from the head of the Comet into the tail is quantified as a measure of DNA damage.

The Comet assay has become widely used for assessing genotoxicity (DNA damage with the potential to lead to a heritable deletion or mutation) as it is very sensitive, provides single cell statistics and requires only small samples of cells. The assay is most commonly carried out using lymphocytes, but recent developments have focussed on the use of cells which may be obtained using minimally invasive procedures such as buccal cells from mouth swabs (Szeto, Y.T., et.al., Mutat. Res., (2005), 578(1-2), 371-81).

There is a current move within genotoxicity testing towards greater use of the Comet assay, as it is perceived as being equally sensitive to the *in-vitro* micronucleus assay, while providing higher specificity towards test compounds (Witte, I. et.al., Toxicol. Sci., (2007), 97(1), 21-6). Increasing the use of the Comet assay will generate a requirement for more efficient, higher throughput Comet assays to replace current laborious and subjective manual processing and analysis methods.

The Comet assay detects DNA damage by electrophoresis of cellular DNA. Cells to be tested are harvested by centrifugation and resuspended in buffer solution. Cells are combined with a molten solution of low melting point agarose and spread on a microscope slide. The agarose suspension of cells is then cooled and allowed to set. The slide is then immersed in a lysis solution to break open the cells and the cellular DNA is denatured by immersion of the slide in an alkaline solution. This lysis and denaturation procedure removes most of the cellular components except nuclear structural proteins and DNA which remain as discrete nucleoids. Following DNA lysis, the slide is washed several times with electrophoresis buffer and the slide transferred to a horizontal electrophoresis apparatus and subjected to an electric current. At this stage, any small DNA fragments resulting from damage to the cell DNA migrate in the electric field away from the bulk DNA which is retained in the nucleoids. Following electrophoresis, the slide is fixed in ethanol, stained for DNA using a fluorescent DNA binding dye and visualised by microscopy. Cells in which DNA damage has occurred show a staining pattern of a bright nucleoid head with a tail of DNA fragments trailing in the direction of electrophoresis.

Since the first use of the Comet assay a range of protocols using different lysis and denaturation reagents have been developed, and semi-automated image analysis is taking the place of manual scoring, although such automation does not constitute very high-throughput at 50 samples/day (Frieauff, W. et.al., Mutagenesis (2001) 16(2), 133-7). Some attempts have been made to adapt cell treatment steps of the protocol to the use of 96 well plates (Kiskinis, E. et.al., Mutagenesis, (2002), 17(1), 37-43); however assays continue to be carried out using microscope slides for electrophoresis and imaging, the preparation of which limits the potential throughput of the assay.

US patent application No.2003/0175821 describes an apparatus for microscopic Comet assay comprising a light-tight box, a stage and stage movement motors located within the box adapted to hold at least one slide. The apparatus is furnished with fluorescence illumination and a CCD image sensor for recording images of cells stained with a fluorescent compound. Additionally, the apparatus comprises an automated algorithm for measurement of the comet head and tail intensity, so as to define a tail moment value indicative of the presence or absence of DNA damage. While this method provides an improvement over manual scoring of Comet assays, the method still uses microscope slides for electrophoresis separation of DNA and is therefore subject to most of the throughput limitations of traditional Comet assay methods.

US 4,695,548 describes the use of gel inserts comprising a solidified liquid such as agarose suitable for use in an electrophoretic method. Lysed cells entrapped within a matrix formed by the solidified liquid and macromolecules such as DNA or intact chromosomes derived from the lysed cells may be advantageously used in electrophoretic separations. The gel inserts are placed directly in a suitable support medium and subjected to one or more electric fields to separate the macromolecules. However this method is intended for use with DNA separations of genomic DNA specifically for the purpose of avoiding physical damage to the DNA by shearing caused by pipetting of DNA solutions, and does not relate to handling of samples for measurement of DNA damage, nor to high-throughput analysis of DNA.

Consequently there is a need for an apparatus and a method for performing DNA damage assays by the Comet method which allow rapid quantitative analysis, are robust and do not rely on subjective interpretation, and which can be carried out at high-throughput and low cost to maximise the utility of the methods for screening.

Recent developments in high-content screening (HCS) platforms, such as IN Cell Analyzer 1000 (GE Healthcare), have allowed automation of image acquisition and data analysis for cell based assays and therefore have significant potential to automate testing for DNA damage. Automation of these assays and the subsequent reduction in time and cost, through the removal of manual scoring, has the potential to allow larger numbers of samples to be tested. Within the pharmaceutical industry, this advance has the potential to allow testing of new chemical entities at an earlier stage in drug development than possible with traditional approaches, with associated savings by highlighting compounds causing DNA damage prior to expenditure of time and resources in medicinal chemistry programs. In other areas, such as in the development of new dyes for foodstuffs, cosmetics and other domestic products, the availability of lower cost automated DNA damage assays will serve to offset rising costs associated with increased testing demanded by regulatory authorities.

### Summary of the Invention

In one aspect, the present invention provides an apparatus for conducting a comet assay according to claim1, an in-situ method of conducting a comet assay according to claim 10 and the use of an apparatus for conducting a comet assay according to claim 12. Preferred embodiments are described by the dependent claims.

The present invention therefore provides a high-throughput, automated assay for detecting DNA damage in cells derived from a variety of tissue and cell types, by use of the apparatus as described herein. The method of the invention is for conducting Comet assays. The Comet assay is a single cell based technique that enables the detection and/or quantitation of DNA damage. Use of the apparatus as described herein, therefore provides a convenient platform for high-throughput testing of agents for mutagenic activity *in-vitro* and *in-vivo,* and for high-throughput monitoring of cells and tissues for DNA damage caused by environmental factors.

Suitably, the side walls of the wells of the multiwell plate are opaque. The base of each well of the multiwell plate is optically transparent.

Preferably, each well of the multiwell plate is furnished with one electrode pair having positive and negative electrodes.

In one embodiment, the base of each well comprises means for orienting cell positioning to aid in analysis of DNA comets. Thus, the base plate of each well may comprise an array of structural features, such as micro-channels and/or pits which serve to orientate cells such that the distribution of cells over the surface of the base is non-random.

The multiwell plate may include a plate lid that, in one embodiment, supports the electrodes and electrical connection means for applying an electrophoretic current to each well. In one embodiment, the positive and negative electrodes disposed within each well are located to be at the same level one with the other, so as to achieve electrophoresis in a plane parallel with the base of the vessel.

In an alternative embodiment, the electrode pairs are orientated such that positive and negative electrodes are on a different plane relative to the base of the well in order to achieve electrophoretic separation of DNA fragments in a direction which is not parallel to the base of the well.

In one embodiment, the positive and negative electrodes comprise straight bars which may be attached to opposite sides of the well.

In another embodiment, the electrodes may be curved to conform to the curvature of the walls of the wells, thus producing a varying field strength across the well, due to the differences in electrode separation at different positions in the well.

In a further embodiment, the base plate of the multiwell plate comprises an array of electrode pairs extending through the plate, the electrode pairs being held in fixed relationship one pair with another and wherein each electrode pair is located so as to fit within a separate well of the multiwell plate.

Suitably, the multiwell plate contains an array of 24-, 48-, 96-, or 384-wells.

In one embodiment, a test agent is contacted with cells that have been pre-dispensed into one or more wells of the multiwell plate. In another embodiment, cells or tissue taken from human or animal subjects may be tested for DNA damage arising from exposure to mutagens and/or other agents of environmental origin, e.g. analysis of DNA damage in blood cells or other isolated cells.

The test agent may be a chemical agent, such as a drug, a food dye, a hormone, a toxin, an alkylating agent, an oxidising agent, a carcinogen, or a mutagen. Other agents include physical effects such as electromagnetic radiation (e.g. UV, X-ray, microwave), β- radiation and heat.

Suitably, in the method according to the second aspect, an immobilising matrix is added to the cells following exposure to the test agent. Suitably, the matrix comprises an isotonic aqueous gel or polymer solution which may be added to live cells under conditions of temperature that do not damage cells. Examples of suitable matrices include, but are not limited to, low melting point agarose (LMPA) and temperature responsive polymers. LMPA may be prepared as a low percentage solution, suitably 0.2-2% (w/v), preferably 0.5%-1 % (w/v), in an isotonic buffer such as phosphate buffered saline. To immobilise cells, an LMPA solution is melted at 37°C and added to cells in wells of the apparatus of the current invention. Temperature responsive polymers with reverse temperature phase change characteristics may also be used, wherein the polymer is liquid at low temperature and solid at higher temperature. Suitable temperature sensitive polymers include CyGel (Polymethyl-oxirane, Biostatus) which is liquid at 0°-4°C and solid at temperatures of 15°C and above. Such polymers may be added to wells of the apparatus as a cooled solution and allowed to set at room temperature.

The cell lysis reagent is preferably a detergent, which may be cationic, anionic, zwitterionic or non-ionic in nature. Examples of suitable detergents include dodecyl trimethyl ammonium bromide (DTAB); cetyl pyridinium chloride (CPC); benzethonium chloride (BZC); sodium dodecyl sulphate (SDS), and N-dodecyl-N,N-dimethyl-3-ammonio-1-propane sulphonate (DDAPS). DTAB, CPC and BZC are cationic surfactants; DDAPS is a zwitterionic surfactant and SDS is an anionic surfactant. The use of these detergents as cell lysis agents is well known in the field. Typical concentrations of the active agent are in the range of 0.4 - 4% w/v.

Suitable staining agents suitable for staining DNA and DNA fragments may be selected from well known classes of DNA-binding dyes, for example ethidium bromide (EtBr), propidium iodide, DAPI (4',6-diamidino-2-phenylindole), YOYO®-1 iodide, Tots®-3 and Acridine Orange. (See "A Guide to Fluorescent Probes and Labeling Technologies", 10^{th} Edition, Molecular Probes Inc.). Preferred DNA staining dyes are those that fluoresce in the red region of the spectrum.

Suitably, detection of patterns of labelled DNA fragments is accomplished using an automated microscope with an objective lens of sufficient magnification to resolve individual cells. Preferably, lenses of 2x to 60x magnification may be used; more preferably lenses of 4x to 20x magnification.

### Description of the Drawings

Figure 1 shows a 96-well plate suitable for electrophoretic separation of DNA fragments and microscopy imaging according to the first aspect;
Figure 2 illustrates the positioning of a curved pair of electrodes within the wells of a multiwell plate; and
Figure 3 illustrates an embodiment of the invention in which the base plate of each well contains an array of micro-channels etched into the surface of the base.

### Detailed Description

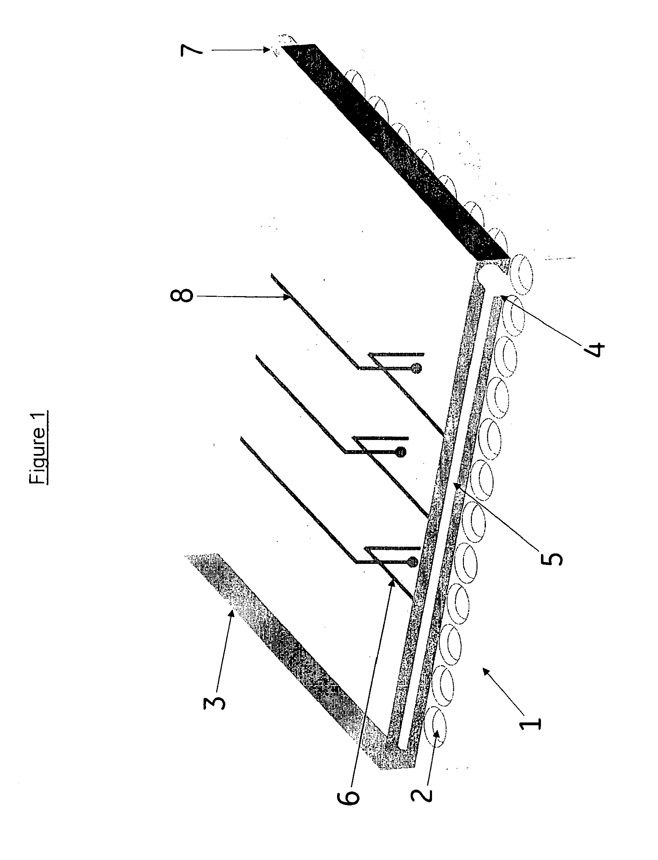

Figure 1 shows a diagram of a 96-well plate [1] suitable for electrophoretic separation and microscopy imaging of DNA fragments (e.g. Packard View Plate, Packard). The plate [1] comprises an array of wells having optically transparent bases [2] which can be used to provide an array of separate vessels in which to carry out Comet assays. Cells are added to the wells [2] and where required, incubated with a test agent for an appropriate time period to allow potential DNA damage activity of the test agent to occur. Cells are overlaid with a suitable matrix to immobilise the cells. Cells are then treated with lysis and alkaline denaturation solutions by adding solutions to the wells, incubating and decanting. The wells of the plate are then filled with electrophoresis buffer, typically TBE (45mM Tris-Borate, 1 mM EDTA pH 8.3) buffer and a moulded plastic plate lid [3] placed over the 96 well plate. The plate lid [3] supports electrodes and electrical connections suitable for applying an electrophoretic current to each well of the 96 well plate for the purposes of separating DNA fragments from the nucleoid bodies of the cells under study. One side of the plate lid [3] is furnished with an electrical connector [4] leading to a first insulated power rail running the length of the plate lid [5]. The power rail [4] is connected in parallel to a series of electrodes [6] supported on moulded pins pointing downwards from the underside of the lid [3] and spaced such that when the lid [3] is placed on the plate [1] an electrode [6] is located in each well. Similarly, on the opposite side of the plate lid [3] there is a second electrical connector [7] and a second power rail provided to support a second series of electrodes [8] which are spaced so as to enter the wells of the plate and provide electrode pairings with the opposing electrodes connected to the first power rail [5]. Connection of the electrodes through the connectors [4] and [5] to a suitable power supply (e.g. EPS 3501 XL, GE Healthcare) and application of a suitable voltage (e.g. 1 volt/cm electrode separation) results in current flow between the electrode pairs in each well and subsequent migration of DNA fragments resulting from any DNA damage in the cells.

The design and disposition of the electrodes within the wells may be varied to achieve different patterns of electrophoretic separation of DNA fragments from nucleoid bodies. For example, electrodes may be oriented to be at the same level within the wells so as to achieve electrophoresis in a plane parallel with the bottom of the plate. Such an orientation of electrodes is useful where it is desired to have all DNA fragments migrating in a single plane such that when the DNA is stained, all comets may be imaged in focus in a single image. Alternatively, the electrodes may be orientated such that positive and negative electrodes are on a different plane relative to the base of the plate in order to achieve electrophoretic separation of DNA fragments in a direction which is not parallel to the base of the plate. Such an electrode orientation may be advantageous where the density of cells (i.e. the number of cells/well) brings cells into close proximity such that electrophoresis in a plane parallel to the base of the plate would lead to overlapping of stained DNA comets. Orientating the electrodes on different planes will generate DNA comets which point upwards from the plate base at an angle determined by the voltage field between the electrodes and the shape of the electrodes. DNA comets orientated away form the base of the apparatus may be analysed by confocal or pseudo-confocal imaging by acquisition of two or more images in planes parallel to the plate base and analysing DNA intensity in three dimensional reconstructions based on the planar images. Alternatively, DNA intensity may be measured in a single image acquired using confocal or pseudo-confocal imaging to out of plane fluorescence such that only DNA that has migrated into the imaging plane is visualised.

Varying the shape of the electrodes may also be used to change the pattern of separation of DNA comets from cells immobilised in the wells of the plate of the current invention as desired to achieve efficient separation and analysis. For example, where both electrodes are orientated in the same plane, electrodes may comprise straight bars on opposite sides of the well such as to induce a voltage field comprising parallel force lines between the electrodes across the well resulting in parallel orientation of DNA comets during electrophoresis. Alternatively, the electrodes may be curved to conform to the curvature of the well walls producing a varying field strength across the well due to the differences in electrode separation at different positions in the well. The latter design of electrodes may be advantageous where it desired to have a range of DNA comet lengths within the test sample to be able select regions for analysis where comets from closely spaced cells are non-overlapping.

Where electrodes are situated on different planes within the wells, in order to achieve upwards migration of DNA fragments away from the base of the plate, the electrodes may be orientated on opposite sides of the wells and at different heights so as to achieve an angled separation relative to the plane of the plate. For example, electrodes of the same size and shape may be placed on opposite sides of the well such that one electrode is at the base of the well and the second electrode is half way up the well. Application of a separation voltage to such electrodes will result in migration of DNA fragments producing comets at an angle of approximately 45° to the plane of the plate allowing comets arising from closely spaced cells to be resolved. Alternatively, electrodes may comprise a ring shaped electrode in the base of the plate and a point electrode situated above the base of the plate. In this electrode orientation, DNA migration is upwards from the base of the plate towards the central point electrode following a cone shaped voltage field producing DNA comets angled up from the base plate towards a common point. To produce vertically orientated DNA comets suitable for analysis by single plane imaging at a defined height above the plate base, electrodes may comprise rings placed at the base of the well and at a distance above the base of the well. Such electrodes will induce a uniform barrel shaped voltage field within the well, thereby causing migration of DNA fragments in a direction substantially perpendicular to the plane of the plate. Consequently, optical sectioning using confocal or pseudo-confocal imaging may be used to image migration of DNA fragments to a pre-selected height above the base of the plate and hence determine the number of cells in the sample in which DNA damage has occurred.

The detection of patterns of labelled DNA fragments may be accomplished using high-throughput automated instruments incorporating a charge coupled device (CCD) imager (such as an area imager) to image all of the wells of the multiwell plate. Thus, to quantify DNA damage, the plate lid [3] is disconnected from the power supply and removed, the electrophoresis buffer decanted and DNA stained with a suitable fluorescent stain (e.g. Acridine Orange, Ethidium Bromide, DAPI, TOTO-3, or YOYO-3) and the plate imaged using a high throughput automated microscope (e.g. IN Cell Analyzer 1000, GE Healthcare) using fluorescence excitation and emission filters suitable for the DNA stain used. Acquired images are analysed using suitable image analysis software (e.g. IN Cell Investigator, GE Healthcare) to segment images, identify regions of DNA staining and make appropriate quantitative measurements (e.g. comet tail intensity, length and moment) to determine the amount of DNA damage in each sample under test.

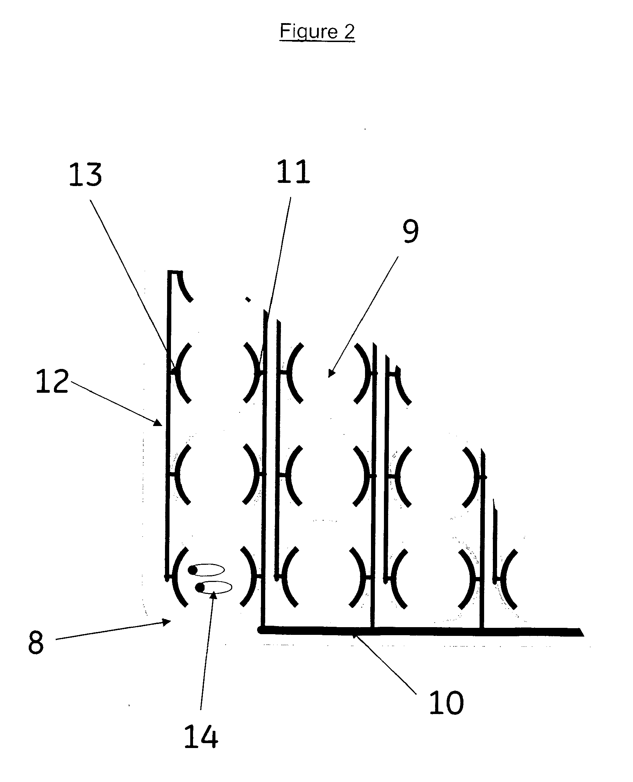

In a further embodiment, the electrode pairs may be integrated into and extend through the plate base forming the multiwell plate such that electrodes are located within each well upon welding the flat base plate to a multi-well injection moulded upper. Techniques for manufacturing multi-well imaging plates using optically transparent glass or plastic bases and optically opaque well uppers are well known. For example, US 6463647 (Corning) describes a method of making a multi-well plate involving joining a top plate that has been extruded and has a plurality of open ended channels, with a bottom plate that is substantially flat. The top plate forms the sidewalls of the wells of the plate and the bottom plate forms the bottoms of the wells. In this embodiment of the current invention (Figure 2) an optically transparent glass or plastic base plate [8] comprises a regular array of discrete well areas [9]. Each well area comprises electrode pairs [11] and [13], wherein the individual electrodes are connected to common rails [10] and [12] thereby allowing parallel connection of the electrodes to an external power supply for electrophoresis to provide a voltage across the electrodes to permit the separation of DNA damage fragments and the generation of DNA comets [14]. Electrodes may be fabricated by application of metal foil or by screen printing using conductive ink. The shape and size of the electrodes may be configured to achieve the desired voltage field shape and hence the desired orientation of DNA comets as described for the first embodiment. Methods for printing conductive materials onto glass and plastic are well known and characterised. For example, US 7192752 (ACEA) describes the application of electrodes to the base of multi-well plates for the purposes of performing impedance measurements on living cells.

Once fabricated, the base is attached to a bottomless well plate in order the form the assay apparatus. In this embodiment, optionally, the sides of the wells may be etched, roughened or chemically treated to promote adhesion of LMP agarose to prevent movement of the agarose gel during lysis and denaturation. The disposable plate may be supplied with a matching re-usable lid for the purposes of connecting the plate to a suitable power supply. The lid may comprise additional features with similar functionality as the lid of a conventional horizontal electrophoresis tank, e.g. power leads, safety interlocks etc. Comet assays may be performed using apparatus according to this embodiment the invention essentially as hereinbefore described. Thus, cells are placed in the wells of the plate, immobilised in a gel and processed using appropriate reagents as previously described. Application of an appropriate voltage to the plate results in separation of DNA fragments from nucleoid bodies in a plane parallel to the base of the plate allowing DNA comets to be may be imaged by high throughput automated microscopy.

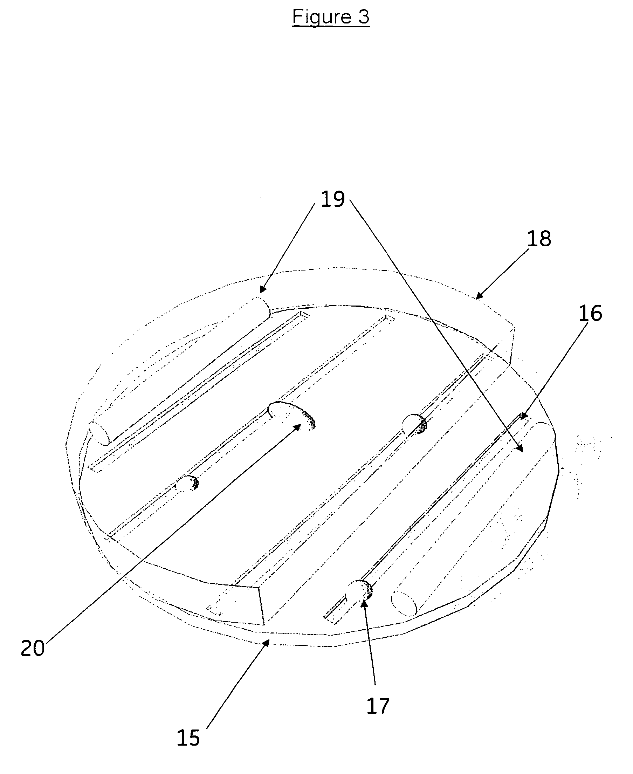

As shown in Figure 3, the base of each well may comprise means for orienting cell positioning to aid in analysis of DNA comets. Thus, the base plate [15] may comprise micro-channels, grooves [16], or other structures such as pits or channels which serve to orientate cells [17] such that the distribution of cells over the surface is non-random. The spacing and/or periodicity of the structures are selected to provide an optimum cell spacing for analysis, i.e. to separate cells in the direction of electrophoresis such that DNA comets are non-overlapping. Immobilisation of cells [17] in structures [16] when cells are overlaid with agarose [18] and subjected to electrophoresis by voltage applied to electrodes on either side of the well base [19] leads to DNA comet formation orientated perpendicular to the structure direction [20] where the separation of the structures ensures that the comet [20] will not be obscured by a comet arising from a cell behind it in the electrophoretic field [17].

Further variations in electrode design, configuration and orientation are possible, including but not limited to, the use of more than two electrodes per well. Multiple electrode configurations are widely used for pulsed field analytical separation of DNA (Lai, E. et.al., Biotechniques, (1989), 1, 34-42) wherein voltage is applied to multiple electrodes in sequence in order to control the direction of migration of DNA to yield a longer effective separation distance. Application of multiple electrodes to the method of the current invention combined with automated switching of voltage may be used to improve DNA comet separation, both within and between DNA comets by controlling separation in 3 dimensions.

Similarly, there is considerable scope for variation in substrate patterning approaches for controlling the spacing and orientation of cells on the base of the apparatus. Current techniques for fabricating and coating cell growth and attachment surfaces provide many approaches to defining cell position and spacing on surfaces (Hasirci, V. and Kenar, H. 1 Nanomed., (2006), 1 (1), 73-90) which may be used in the apparatus of the present invention for controlling cell to cell spacing for optimal DNA comet analysis.

The apparatus and method of the current invention provide a significant enhancement in speed, efficiency and throughput of Comet assays when compared to the prior art. By allowing parallel processing of assay samples in wells of multi-well plates and enabling *in-situ* electrophoresis of DNA in the same wells, methods employing the present apparatus will obviate the need for many of the operations, including centrifugation of cell suspensions and application of agarose cell suspensions to microscope slides, used in traditional Comet assay protocols. Since all procedures for each test sample are carried out in the same well from gel immobilisation to imaging, the method of the present invention is compatible with automation using automated liquid handling and robotics.

In addition to throughput and efficiency advantages over prior art methods, the present invention provides means for carrying out Comet assays *in-situ* rather on disaggregated cells or cells in suspension. Conventional Comet assay protocols require cells for analysis to be suspended in a solution of gel, typically low melting point agarose. This confers two disadvantages. Firstly, when cells are analysed by electrophoresis and imaging, the cells are dispersed randomly at different depths within the agarose. As a consequence, at any given plane some DNA comets will be in focus while others will be out of focus making quantitative analysis by imaging difficult. Secondly, since cells need to be in suspension to mix with agarose, analysis of adherent cells in culture, or cells from tissue entails disruption of the sample, typically by enzyme treatment, to yield a cell suspension thereby destroying the morphological and population distribution of the sample.

In the method of the present invention, Comet assays may be performed *in-situ* on cell cultures grown in the wells of the apparatus. Cells may be immobilised in agarose and treated without removal from the growth substrate allowing DNA damage as measured by the Comet assay to be correlated with other cellular parameters measurable by automated microscopy, or study of differential DNA damage in different sub-populations of cells within the sample. An additional advantage of the method is that since cells may be overlaid with agarose *in-situ* while attached to the base of wells, the depth of agarose is minimised to that needed to cover the cells, hence constraining electrophoretic separation of DNA to a thin plane compatible with imaging.

Alternatively the method may be used for analysis of DNA damage in tissue sections in-situ. By placing thin sections of frozen tissue in the wells of the apparatus of the present invention and overlaying with agarose, the method of the present invention may be used to study the occurrence of DNA damage in different cells within the tissue. Variations in electrode design and disposition described above may be used to optimise the direction of electrophoresis to enable analysis of closely packed cells in tissue sections to be achieved.

Alternatively the method may be used for analysis of DNA damage in blood cells or other isolated cells taken from animal or human subjects for evaluation of test or environmental agents. By placing cells in the wells of the apparatus and subjecting the plate to centrifugation, cells to be tested may be distributed as a monolayer in the base of the wells and then overlaid with an immobilising matrix.

## Claims

1. Apparatus for conducting a Comet assay, said apparatus comprising a multiwell plate, said plate comprising an array of wells held in fixed relationship with each other and each well having an axis, side walls, and a base and wherein said well is provided with electrode pairs disposed therein; and **characterised in that** there is provided means for parallel connection of said electrode pairs to an external voltage supply which in use creates an electrophoretic field, and wherein the base of each well of the multiwell plate is optically transparent.

2. Apparatus according to claim 1, wherein said base is generally perpendicular to the axis of the well.

3. Apparatus according to claim 1, wherein the side walls of the wells of the multiwell plate are opaque.

4. Apparatus according to any one of claims 1 to 3, wherein each well of the multiwell plate is furnished with one electrode pair.

5. Apparatus according to claim 4, said multiwell plate includes a plate lid that supports the electrodes and electrical connection means for applying an electrophoretic current to each well.

6. Apparatus according to claim 4, wherein the base plate of the multiwell plate comprises an array of electrode pairs extending through the plate and wherein each electrode pair is located so as to fit within a separate well of the multiwell plate.

7. Apparatus according to claim 5 or claim 6, wherein the positive and negative electrodes within each well are located to be at the same level one with the other.

8. Apparatus according to claim 5 or claim 6, wherein the positive and negative electrodes within each well are located to be on a different plane relative to the base of the well.

9. Apparatus according to any of claims 1 to 8, wherein the base of each well comprises an array of micro-channels and/or pits etched into the base.

10. An *in-situ* method for conducting a Comet assay by the use of an apparatus according to any of claims 1 to 9, the method comprising:
a) providing cells to be tested in one or more wells of said apparatus in the presence of a fluid medium;
b) overlaying the cells with an immobilising matrix;
c) treating the cells with a cell lysis and a denaturation reagent so as to provide a matrix comprising denatured cellular DNA;
d) contacting the denatured cellular DNA with an electrophoresis solution;
e) applying a voltage to electrodes in said one or more wells under conditions to cause electrophoretic separation of DNA fragments;
f) contacting said DNA fragments with a staining agent; and
g) using imaging means to image all of the wells of the multiwell plate to observe a pattern of DNA fragments.

11. The method of claim 10, additionally comprising the step of exposing the cells to a test agent after step a) and prior to step b).

12. Use of an apparatus for conducting a Comet assay, the apparatus comprising a multiwell plate, said plate comprising an array of wells held in fixed relationship with each other and each well having an axis, side walls, and a base and wherein said well is provided with electrode pairs disposed therein; and wherein there is provided means for parallel connection of said electrode pairs to an external voltage supply which in use creates an electrophoretic field; and wherein the base of each well of the multiwell plate is optically transparent.

## Patentansprüche

1. Vorrichtung zur Durchführung eines Comet-Assays, wobei die Vorrichtung eine Multititerplatte umfasst, wobei die Platte eine Anordnung von Vertiefungen umfasst, die in fester Beziehung zueinander gehalten werden, und jede Vertiefung eine Achse, Seitenwände und einen Boden aufweist und wobei die Vertiefung mit darin angeordneten Elektrodenpaaren versehen ist; und **dadurch gekennzeichnet, dass** Mittel zum parallelen Anschluss der Elektrodenpaare an eine externe Spannungsversorgung vorgesehen sind, die bei Einsatz ein elektrophoretisches Feld erzeugen; und wobei der Boden jeder Vertiefung der Multititerplatte optisch transparent ist.

2. Vorrichtung nach Anspruch 1, wobei der Boden im Allgemeinen rechtwinkelig zur Achse der Vertiefung ist.

3. Vorrichtung nach Anspruch 1, wobei die Seitenwände der Vertiefungen der Multititerplatte opak sind.

4. Vorrichtung nach einem der Ansprüche 1 bis 3, wobei jede Vertiefung der Multititerplatte mit einem Elektrodenpaar ausgestattet ist.

5. Vorrichtung nach Anspruch 4, wobei die Multititerplatte einen Plattendeckel beinhaltet, der die Elektroden und elektrische Anschlussmittel zum Anlegen eines elektrophoretischen Stroms an jeder Vertiefung trägt.

6. Vorrichtung nach Anspruch 4, wobei die Bodenplatte der Multititerplatte eine Anordnung von Elektrodenpaaren umfasst, die sich durch die Platte erstrecken, und wobei jedes Elektrodenpaar so angeordnet ist, dass es in eine separate Vertiefung der Multititerplatte passt.

7. Vorrichtung nach Anspruch 5 oder Anspruch 6, wobei die positive und die negative Elektrode innerhalb jede Vertiefung so angeordnet sind, dass die eine auf gleicher Höhe mit der anderen ist.

8. Vorrichtung nach Anspruch 5 oder Anspruch 6, wobei die positive und die negative Elektrode innerhalb jeder Vertiefung so angeordnet sind, dass sie sich auf unterschiedlicher Ebene in Bezug auf den Boden der Vertiefung befinden.

9. Vorrichtung nach einem der Ansprüche 1 bis 8, wobei der Boden jeder Vertiefung eine Anordnung von Mikrokanälen und/oder Pits umfasst, die in den Boden geätzt sind.

10. In-situ-Verfahren zur Durchführung eines Comet-Assays durch die Verwendung einer Vorrichtung nach einem der Ansprüche 1 bis 9, wobei das Verfahren umfasst:
a) Bereitstellen zu testender Zellen in einer oder mehreren Vertiefung der Vorrichtung in Gegenwart eines fluiden Mediums;
b) Überschichten der Zellen mit einer immobilisierenden Matrix;
c) Behandeln der Zellen mit einem Zelllyse- und einem Denaturierungsreagens, um eine Matrix bereitzustellen, die denaturierte zelluläre DNA umfasst;
d) Kontaktieren der denaturierten zellulären DNA mit einer Elektrophoreselösung;
e) Anlegen einer Spannung an Elektroden in einer oder mehreren Vertiefungen unter Bedingungen, die eine elektrophoretische Trennung von DNA-Fragmenten bewirken;
f) Kontaktieren der DNA-Fragmente mit einem Färbemittel; und
g) Einsetzen von Bildgebungsmitteln, um sämtliche der Vertiefungen der Multititerplatte abzubilden zur Beobachtung eines Musters von DNA-Fragmenten.

11. Verfahren nach Anspruch 10, das zusätzlich den Schritt umfasst, die Zellen nach Schritt a) und vor Schritt b) einem Testmittel auszusetzen.

12. Verwendung einer Vorrichtung zur Durchführung eines Comet-Assays, wobei die Vorrichtung eine Multititerplatte umfasst, wobei die Platte eine Anordnung von Vertiefungen umfasst, die in fester Beziehung zueinander gehalten werden, und jede Vertiefung eine Achse, Seitenwände und einen Boden aufweist und wobei die Vertiefung mit darin angeordneten Elektrodenpaaren versehen ist; und wobei Mittel zum parallelen Anschluss der Elektrodenpaare an eine externe Spannungsversorgung vorgesehen sind, die bei Einsatz ein elektrophoretisches Feld erzeugen; und wobei der Boden jeder Vertiefung der Multititerplatte optisch transparent ist.

## Revendications

1. Dispositif de mise en oeuvre d'un dosage comète, ledit dispositif comprenant une plaque à puits multiples, ladite plaque comprenant une rangée de puits maintenus en relation fixe l'un par rapport à l'autre et chaque puits présentant un axe, des parois latérales, et une base et dans lequel des paires d'électrodes sont disposées à l'intérieur dudit puits ; et **caractérisé en ce qu'**il est prévu des moyens de raccordement en parallèle desdites paires d'électrodes à une source de tension externe qui, en utilisation, crée un champ d'électrophorèse, et dans lequel la base de chaque puits de la plaque à puits multiples est optiquement transparente.

2. Dispositif selon la revendication 1, dans lequel ladite base est sensiblement perpendiculaire à l'axe du puits.

3. Dispositif selon la revendication 1, dans lequel les parois latérales des puits de la plaque à puits multiples sont opaques.

4. Dispositif selon l'une quelconque des revendications 1 à 3, dans lequel chaque puits de la plaque à puits multiples est équipé d'une paire d'électrodes.

5. Dispositif selon la revendication 4, dans lequel ladite plaque à puits multiples comporte un couvercle de plaque qui supporte les électrodes et des moyens de raccordement électriques destinés à appliquer un courant d'électrophorèse sur chaque puits.

6. Dispositif selon la revendication 4, dans lequel la plaque de base de la plaque à puits multiples comprend une rangée de paires d'électrodes s'étendant à travers la plaque et dans lequel chaque paire d'électrodes est située de manière à s'insérer dans un puits distinct de la plaque à puits multiples.

7. Dispositif selon la revendication 5 ou 6, dans lequel les électrodes positives et négatives à l'intérieur de chaque puits sont agencées de manière à être au même niveau l'une par rapport à l'autre.

8. Dispositif selon la revendication 5 ou 6, dans lequel les électrodes positives et négatives à l'intérieur de chaque puits sont agencées de manière à être sur un plan différent par rapport à la base du puits.

9. Dispositif selon l'une quelconque des revendications 1 à 8, dans lequel la base de chaque puits comprend une rangée de micro-canaux et/ou de cavités gravées dans la base.

10. Procédé in-situ de mise en oeuvre d'un dosage comète en utilisant un dispositif selon l'une quelconque des revendications 1 à 9, le procédé comprenant :
a) la préparation de cellules à tester dans un ou plusieurs puits dudit dispositif en la présence d'un milieu fluide ;
b) le recouvrement des cellules avec une matrice d'immobilisation ;
c) le traitement des cellules avec une lyse cellulaire et un réactif de dénaturation de manière à former une matrice comprenant de l'ADN cellulaire dénaturé ;
d) la mise en contact de l'ADN cellulaire dénaturé avec une solution d'électrophorèse ;
e) l'application d'une tension sur les électrodes dans le ou lesdits puits sous des conditions permettant de produire la séparation par électrophorèse de fragments d'ADN ;
f) la mise en contact desdits fragments d'ADN avec un agent colorant ; et
g) l'utilisation d'un moyen d'imagerie afin de produire l'image de tous les puits de la plaque à puits multiples de manière à observer un profil de fragments d'ADN.

11. Procédé selon la revendication 10, comprenant, en outre, l'étape d'exposition des cellules à un agent de test après l'étape a) et avant l'étape b).

12. Utilisation d'un dispositif de mise en oeuvre d'un dosage comète, le dispositif comprenant une plaque à puits multiples, ladite plaque comprenant une rangée de puits maintenus en relation fixe l'un par rapport l'autre, et chaque puits présentant un axe, des parois latérales, et une base et dans lequel des paires d'électrodes sont disposées à l'intérieur dudit puits ; et
dans lequel il est agencé des moyens destinés à assurer le raccordement en parallèle de ladite paire d'électrodes à une source de tension externe qui, en utilisation, crée un champ d'électrophorèse ; et dans lequel la base de chaque puits de la plaque à puits multiples est optiquement transparente.
